# EUROPÄISCHE PATENTSCHRIFT

(11) **EP 3 702 742 B1**
(45) Veröffentlichungstag und Bekanntmachung des Hinweises auf die Patenterteilung: **03.05.2023**
(21) Anmeldenummer: 20158822.5
(22) Anmeldetag: 21.02.2020
(51) Int. Cl.: G01G 19/08, G01G 23/01

(54) **VERFAHREN ZUR KALIBRIERUNG EINER WÄGEVORRICHTUNG EINER FAHRZEUGACHSE EINES FAHRZEUGS MITTELS EINER KALIBRIERUNGSVORRICHTUNG UND KALIBRIERUNGSVORRICHTUNG**
METHOD FOR CALIBRATING A WEIGHING DEVICE OF A VEHICLE AXLE BY MEANS OF A CALIBRATION DEVICE AND CALIBRATION DEVICE
PROCÉDÉ D'ÉTALONNAGE D'UN DISPOSITIF DE PESÉE D'UN ESSIEU DE VÉHICULE D'UN VÉHICULE AU MOYEN D'UN DISPOSITIF D'ÉTALONNAGE ET DISPOSITIF D'ÉTALONNAGE

(30) Priorität: 27.02.2019 DE 102019202648
(43) Veröffentlichungstag der Anmeldung: 02.09.2020
(73) Patentinhaber: Continental Automotive Technologies GmbH, 30165 Hannover (DE)
(72) Erfinder: Sidi-Yacoub, Mohamed, 65824 Schwalbach a. Ts. (DE); Dohmen, Ralf, 65824 Schwalbach a. Ts. (DE); Pulver, Nikolai Tobias Lennart, 65824 Schwalbach a. Ts. (DE); Schmidt, Frank, 65824 Schwalbach a. Ts. (DE); Bertl, Svenja, 65824 Schwalbach a. Ts. (DE)
(74) Vertreter: Continental Corporation

(56) Entgegenhaltungen:
- JP-A- H08 122 137
- US-A1- 2005 261 852

## Beschreibung

Die Erfindung betrifft ein Verfahren zur Kalibrierung einer Wägevorrichtung einer Fahrzeugachse eines Fahrzeugs mittels einer Kalibrierungsvorrichtung und eine Kalibrierungsvorrichtung.

Zur Erfassung eines Gewichts einer Ladung weisen Nutzfahrzeuge eigene Wägevorrichtungen auf. Dadurch ist es möglich, dass das Gewicht der Ladung durch das Nutzfahrzeug selbst erfasst wird, wodurch keine externe Fahrzeugwaage verwendet werden muss. Das erfasste Gewicht wird dabei an einer Gewichtsanzeige im Fahrerhaus angezeigt. Zur Erfassung des Gewichts werden verschiedene Techniken angewandt. Weit verbreitet ist die Verwendung von Dehnmessstreifen als Wägesensoren der Wägevorrichtung. Die Dehnmessstreifen werden dabei an einer Fahrzeugachse des Fahrzeugs montiert. In Abhängigkeit von dem Gewicht der Ladung ergibt sich die auf die Fahrzeugachse wirkende Achsenlast. Aufgrund der Achsenlast wird die Fahrzeugachse gebogen, sodass diese eine Biegelinie aufweist. Mittels einer Erfassung einer Dehnung an einer Oberfläche der Fahrzeugachse lässt sich über den Verlauf der Biegelinie die auf die Fahrzeugachse wirkende Achsenlast berechnen. Die hierfür verwendeten Dehnmessstreifen werden bevorzugt an Positionen der Fahrzeugachse angeordnet, an denen eine lineare Beziehung zwischen der erfassten Dehnung und der Achsenlast besteht.

Um eine zuverlässige Bestimmung der Achsenlast mittels der Wägevorrichtung zu ermöglichen, ist es erforderlich, die Wägevorrichtung des Fahrzeugs in regelmäßigen Abständen zu kalibrieren. Die Kalibrierung erfolgt in der Regel mittels einer Messung eines jeweiligen Messwerts des Wägesensors der Wägevorrichtung an zwei Messpunkten. An einem jeweiligen Messpunkt wird mittels einer Beladung des Fahrzeugs mit Referenzgewichten ein vorbestimmtes Gewicht bereitgestellt. Als erster Messpunkt wird oft ein Leergewicht des Fahrzeugs gewählt. Als zweiter Messpunkt wird oft der sogenannte Maximallast-Punkt gewählt, bei dem das Fahrzeug mit dem maximal zulässigem Referenzgewicht beladen ist. Aufgrund des linearen Zusammenhangs zwischen dem Messwert und der Achsenlast kann über die zwei Messpunkte ein Kalibrationswert bestimmt und in einer Steuereinheit der Wägevorrichtung oder dem Wägesensor gespeichert werden.

Die Verwendung von Referenzgewichten zur Kalibrierung der Wägesensoren der Wägevorrichtung des Fahrzeugs ist aufgrund des hohen Aufwands mit hohen Kosten verbunden. In der Regel werden die Referenzgewichte aufgrund ihrer Größe und des aufwändigen Verladeverfahrens bei speziellen Anbietern gelagert. Das Verladen der Referenzgewichte erfolgt mittels Gabelstaplers. Zur Kalibrierung müssen Fahrzeuge einen dieser Anbieter aufsuchen und stehen für den Zeitraum nicht zur Verfügung. Eine lokale Durchführung einer Kalibrierung durch Fahrzeuginhaber ist aufgrund fehlender Alternativlösungen, die einen geringeren Platz beanspruchen, nicht wirtschaftlich. Ein weiteres Kalibrierungsverfahren umfasst eine Verwendung von Wiegebrücken. Ein Fahrzeug wird hierbei zu einer Kalibrierung auf eine Wiegebrücke gefahren. Eine erste Messung der Messwerte des Wägesensors kann bei einem Leer- oder Normalgewicht des Fahrzeugs erfolgen. Die Achsenlast kann durch die Wiegebrücke erfasst und mit dem Messwert in Verbindung gesetzt werden. Eine zweite Messung kann nach einem Beladen des Fahrzeugs mit einem beliebigen Gewicht erfolgen. Die Achsenlast wird hierbei wieder durch die Wiegebrücke erfasst. Diese Art der Kalibrierung wird beispielsweise an Baustellen für Baufahrzeuge durch Dienstleister durchgeführt.

Aufgrund der Richtlinie 96/53/EG des Rates vom 25. Juli 1996 zur Festlegung der höchstzulässigen Abmessungen für bestimmte Straßenfahrzeuge im innerstaatlichen und grenzüberschreitenden Verkehr in der Gemeinschaft sowie zur Festlegung der höchstzulässigen Gewichte im grenzüberschreitenden Verkehr, ist eine vorbestimmte Genauigkeit der Wägevorrichtungen vorgeschrieben.

In dem Bericht von Todts, W., Oehry, B., Haas, L., and van Driel, C. (2013), "Study on Heavy Vehicle On-Board Weighing", Final Report, Rapp Trans AG, Basel; ist ein Überblick über die Verwendung der Wägevorrichtungen offenbart.

In der WO 2007/105186 A1 ist ein System zur Bestimmung einer Fahrzeugbeladung offenbart. In dem System ist es vorgesehen, Dehnmessstreifen an Fahrzeugachsen des Fahrzeugs anzuordnen. Die Dehnmessstreifen sind dabei an Positionen der Fahrzeugachsen angeordnet, an denen ein nahezu lineares Verhältnis zwischen der Dehnung und der Beladung des Fahrzeugs besteht. Eine Hauptsteuereinheit des Systems ist dazu eingerichtet, aus den erfassten Dehnungen die Fahrzeugbeladung zu berechnen.

JP H08 122137 A betrifft ein Verfahren und eine Vorrichtung zur Kalibrierung einer Federkonstante einer Feder einer in einem Lastkraftwagen zwischen einem Rahmen und einem Rad angeordneten Aufhängung. Zur Kalibrierung der Federkonstante wird der Rahmen durch eine Lastvorrichtung, die einen Hydraulikzylinder aufweist, heruntergezogen. Dadurch wird eine Verschiebung der Feder kontinuierlich verändert, und eine Hystereseschleife von Gewichts-/Verschiebungseigenschaften wird erhalten. Ein an dem Fahrzeug angeordneter Gewichtsmesser misst die Verschiebung der Feder, und ein auf dem Lastkraftwagen angeordnetes Gewicht wird anhand der Federkonstante dieser Feder gemessen. Die Kalibrierung der Federkonstante wird vorgenommen, um eine exakte Gewichtsmessung durchführen zu können, da sich die Federkonstante im Laufe der Zeit ändert.

Aus US 2005/261852 A1 ist ein Kalibrierungsassistenzverfahren, eine Kalibrierungsassistenzvorrichtung und ein Kalibrierungsassistenzsystem zum Unterstützen einer Kalibrierung einer Gewichtmesseinheit zum Messen eines Ladegewichts eines Fahrzeugs bekannt. Blattfedern können zwischen linken und rechten Enden einer Vorderachse und einer Hinterachse des Fahrzeugs und einem Rahmen angeordnet sein. An den Achsen fixierte Sensoreinheiten können ein Lastsignal entsprechend einer Verformung der Achsen erzeugen, wobei die Verformung erzeugt wird, wenn eine auf das Fahrzeug aufgebrachte Last durch die Blattfedern hindurch zu den Achsen geleitet wird. Unterhalb des Fahrzeugs kann ein Wagenheber zum Anheben eines auf einer Waage angeordneten Reifens angebracht sein.

Es ist eine Aufgabe der Erfindung, eine Kalibrierung von Wägevorrichtungen ohne die Verwendung von Referenzgewichten zu ermöglichen.

Durch die Erfindung wird ein Verfahren zur Kalibrierung einer Wägevorrichtung einer Fahrzeugachse eines Fahrzeugs mittels einer Kalibrierungsvorrichtung gemäß Anspruch 1 bereitgestellt. In dem Verfahren ist es vorgesehen, dass das Fahrzeug auf der Kalibrierungsvorrichtung derart angeordnet wird, dass zumindest ein Rad der Fahrzeugachse, bevorzugt zwei Räder oder alle Räder auf einem Aufstandselement der Kalibrierungsvorrichtung angeordnet werden. Mit anderen Worten wird das Fahrzeug derart positioniert, dass sich das zumindest eine Rad der Fahrzeugachse auf dem Aufstandselement der Kalibrierungsvorrichtung befindet. Das Aufstandselement kann beispielsweise eine portable Platte (beispielsweise eine Stahlplatte) oder ein Bodenbereich sein. Das Aufstandselement kann einstückig oder mehrstückig ausgestaltet sein, wobei bei mehrstückiger Ausgestaltung beispielsweise eine Platte pro Rad vorgesehen sein kann. Zumindest ein mit einer Halteeinrichtung der Kalibrierungsvorrichtung verbundenes Zugelement wird mit dem Fahrzeug verbunden. Mit anderen Worten ist es vorgesehen, dass das Zugelement der Kalibrierungsvorrichtung an dem Fahrzeug befestigt wird. Das Zugelement kann beispielsweise ein Ladungssicherungsgurt oder ein Seil sein, das mit einem Haken oder einer Öse an dem Fahrzeug befestigt wird. Das Zugelement ist mit der Halteeinrichtung verbunden, die fest an der Kalibrierungsvorrichtung angeordnet und beispielsweise als Haken oder Öse zur Befestigung des Seils ausgebildet ist. Mittels eines Hubaktuators wird das Aufstandselements von einer Ausgangsstellung in eine Anhebestellung relativ zur Halteeinrichtung angehoben, wobei in der Anhebestellung über das Zugelement eine vorbestimmte Zugkraft auf das Fahrzeug in Richtung des Aufstandselements wirkt. Der Hubaktuator kann beispielsweise ein Hydraulikzylinder sein, der dazu ausgelegt ist, das Aufstandselement mit dem darauf angeordneten Fahrzeug relativ zur Halteeinrichtung höhen zu verstellen. Durch das Anheben des Aufstandselements relativ zur Halteeinrichtung wird eine vorbestimmte Zugkraft auf das Zugelement ausgeübt. Die Zugkraft wird durch das Zugelement auf das Fahrzeug übertragen, wobei die Zugkraft an dem Fahrzeug in Richtung des Aufstandselements wirkt. Mit anderen Worten erfolgt durch das Zugelement eine Kraftübertragung an das Fahrzeug, wobei die Zugkraft in Richtung des Aufstandselements wirkt. Die Zugkraft kann an dem Fahrzeug in Richtung des Erdmittelpunktes wirken, wodurch die Zugkraft in dieselbe Richtung wirkt, wie die durch eine Ladung hervorgerufene Gravitationskraft. Durch eine Krafterfassungseinrichtung der Kalibrierungsvorrichtung wird die wirkende Achsenlast erfasst. Mit anderen Worten weist die Kalibrierungsvorrichtung eine Krafterfassungseinrichtung auf, die während des Verfahrens die auf die Fahrzeugachse des Fahrzeugs wirkende Achsenlast misst. Mittels zumindest eines Wägesensors der Wägevorrichtung wird ein Messwert bezogen auf die Fahrzeugachse erfasst. Mit anderen Worten wird durch den Wägesensor der Messwert erfasst, der mit der Fahrzeugachse und der auf die Fahrzeugachse wirkenden Achsenlast in Verbindung steht. Dem Messwert wird in einer Steuereinheit der Wägevorrichtung die wirkende Achsenlast zugeordnet. Mit anderen Worten wird die erfasste Achsenlast mit dem durch die Wägevorrichtung erfassten Messwert in Verbindung gesetzt oder assoziiert, sodass die Beziehung zwischen dem Messwert und der Achsenlast in der Steuereinheit bereitgestellt wird. Dies entspricht einer Kalibrierung. Es ist somit nach der Durchführung des Kalibrierungsverfahrens möglich, aus dem erfassten Messwert die zugehörige Achsenlast zu berechnen.

Durch die Erfindung ergibt sich der Vorteil, dass ein Kalibrierungsverfahren ohne ein Verladen von Referenzgewichten durchgeführt werden kann.

Eine Weiterbildung der Erfindung sieht vor, dass das Zugelement ein Seil und/oder eine Kette und/oder einen Gurt und/oder eine Stange aufweist. Mit anderen Worten ist es vorgesehen, dass während des Kalibrierungsverfahrens eine Kraft mittels eines Zugelements an das Fahrzeug übertragen wird, wobei das Zugelement ein Seil, eine Kette, ein Gurt und/oder eine Stange umfasst. Dadurch ergibt sich der Vorteil, dass in Abhängigkeit der Befestigungsmöglichkeiten an dem Fahrzeug sowie an der Halteeinrichtung das Zugelement aus einem oder mehreren Elementen bestehen kann. Es kann beispielsweise vorgesehen sein, dass das Zugelement eine Kette aufweist, sodass es nicht vollständig starr ist. Dadurch wird eine gegenüber einer Stange flexiblere Anbringung des Zugelements an dem Fahrzeug sowie an der Halteeinrichtung ermöglicht und eine Umleitung der Zugkraft über Rollen und Laschen ermöglicht. Es ist beispielsweise möglich, dass das Zugelement einen Ladesicherungsgurt, ein Stahlseil und/oder eine Kette aufweist. Für den Fall, dass eine vorbestimmte Zugkraft ausgeübt wird, für die beispielsweise ein Gurt nicht ausreicht, kann es vorgesehen sein, das das Zugelement eine Stange aufweist oder ist.

Eine Weiterbildung der Erfindung sieht vor, dass die Krafterfassungseinrichtung eine an der Zugeinheit angeordnete Zugerfassungseinheit aufweist. Mit anderen Worten umfasst die Krafterfassungseinrichtung eine an dem Zugelement angeordnete Zugerfassungseinheit. Dadurch ergibt sich der Vorteil, dass die Achsenlast direkt an dem Zugelement erfasst werden kann und somit kein zusätzliches Element, wie beispielsweise eine Wiegevorrichtung verwendet werden muss. Es kann beispielsweise an einem Haken, der an dem Fahrzeug angebracht ist, um das Zugelement mit dem Fahrzeug zu verbinden eine Kraftmessdose angeordnet sein, um die Achsenlast zu erfassen. Es kann auch vorgesehen sein, dass die Zugerfassungseinheit ein an dem Zugelement angeordnetes Extensometer ist.

Eine Weiterbildung der Erfindung sieht vor, dass die Krafterfassungseinrichtung eine an dem Aufstandselement angeordnete Wiegeeinrichtung aufweist. Mit anderen Worten wird die Achsenlast mittels einer als Waage ausgebildeten Wiegeeinrichtung gemessen, wobei die Wiegeeinrichtung an dem Aufstandselement angeordnet ist. Es kann beispielsweise vorgesehen sein, dass eine Krafterfassungseinrichtung auf oder unter einem jeweiligen Aufstandselement angeordnet ist, um die Achsenlast an einem oder beiden Rädern der Fahrzeugachse zu erfassen. Bei einer Anordnung der Wiegeeinrichtung zwischen dem Rad und dem Aufstandselement kann das Aufstandselement gegen das Rad gezogen werden. Die Wiegeeinrichtung kann beispielsweise ein sogenanntes Wiegepad sein.

Eine Weiterbildung der Erfindung sieht vor, dass der Hubaktuator einen hydraulischen Aktuator, insbesondere einen Hydraulikzylinder, oder einen Elektromotor mit einem Gewinde aufweist. Mit anderen Worten wird die Hubkraft auf das Aufstandselement mittels eines hydraulischen Aktuators oder eines Elektromotors mit einem Gewinde ausgeübt. Es kann beispielsweise vorgesehen sein, dass unter der portablen Stahlplatte des Aufstandselements eine Stange angeordnet ist, die mittels des Hydraulikzylinders nach oben oder unten bewegt werden kann, wodurch die Stahlplatte, auf der das Rad des Fahrzeugs steht, höhenverstellt wird.

Die Erfindung sieht vor, dass das Zugelement an der Fahrzeugachse angeordnet wird. Mit anderen Worten ist es vorgesehen, das Zugelement mit einem Ende an der Fahrzeugachse zu befestigen, sodass die Zugkraft direkt auf die Fahrzeugachse übertragen wird. Durch die erfindungsgemäße Ausbildung ergibt sich der Vorteil, dass eine direkte Kraftübertragung auf die Fahrzeugachse erfolgt. Eine Beeinflussung der Messwerte durch andere Elemente des Fahrzeugs, wie es bei einer indirekten Kraftausübung der Zugkraft auf das Fahrzeug möglich ist, ist somit ausgeschlossen. Das Zugelement kann beispielsweise eine Schlinge oder einen Haken aufweisen, der an der Achse befestigt ist.

Eine Weiterbildung der Erfindung sieht vor, dass die Achsenlast über eine Schnittstelle des Fahrzeugs von der Krafterfassungseinrichtung an eine Steuereinheit der Wägevorrichtung übertragen wird. Mit anderen Worten ist es vorgesehen, dass die von der Krafterfassungseinrichtung der Kalibrierungsvorrichtung erfasste Achsenlast über eine Schnittstelle des Fahrzeugs an die Steuereinheit der Wägevorrichtung übertragen wird. Dadurch ergibt sich der Vorteil, dass eine automatische Kalibrierung der Steuereinheit erfolgen kann. Es kann beispielsweise vorgesehen sein, dass die Kalibrierungsvorrichtung die erfasste Achsenlast über einen Ethernetanschluss an die Steuereinheit der Wägevorrichtung überträgt. Alternativ oder zusätzlich dazu können die Messwerte und/oder assoziierte Gewichtswerte in der Krafterfassungseinrichtung und somit im Sensor selbst abgelegt werden. Die Steuereinheit kann die Achsenlast mit dem Messwert aus dem Wägesensor der Wägevorrichtung zusammenführen, um einen Kalibrierungswert zu berechnen, der das Verhältnis zwischen dem Messwert und der Achsenlast beschreibt.

Eine Weiterbildung der Erfindung sieht vor, dass der zumindest eine Wägesensor der Wägevorrichtung ein Dehnmessstreifen ist. Mit anderen Worten werden die Messwerte durch einen als Dehnmessstreifen ausgebildeten Wägesensor erfasst. Es kann beispielsweise vorgesehen sein, dass der Messwert eine Dehnung ist, die an einer Seite der Fahrzeugachse durch den Wägesensor erfasst wird. Dadurch ergibt sich der Vorteil, dass eine direkte Erfassung des Messwerts an der Fahrzeugachse ermöglicht wird.

Die Erfindung umfasst auch eine Kalibrierungsvorrichtung zur Kalibrierung einer Wägevorrichtung einer Fahrzeugachse eines Fahrzeugs gemäß Anspruch 8. Die Kalibrierungsvorrichtung weist ein Aufstandselement zur Anordnung zumindest eines Rads der Fahrzeugachse des Fahrzeugs auf. Mit anderen Worten bildet das Aufstandselement einen Bereich, auf dem das zumindest eine Rad während des Verfahrens anzuordnen ist. Die Kalibrierungsvorrichtung weist zumindest ein Zugelement zum Verbinden des Fahrzeugs mit einer Halteeinrichtung der Kalibrierungsvorrichtung auf. Die Kalibrierungsvorrichtung ist dazu eingerichtet, mittels eines Hubaktuators das Aufstandselements von einer Ausgangsstellung in eine Anhebestellung relativ zur Halteeinrichtung anzuheben und die Zugkraft durch das Zugelement auf das Fahrzeug derart zu übertragen, dass die Zugkraft an dem Fahrzeug in Richtung des Aufstandselements wirkt. Die Kalibrierungsvorrichtung weist eine Krafterfassungseinrichtung auf, die dazu eingerichtet ist, die wirkende Achsenlast zu erfassen.

Zu der Erfindung gehören auch Weiterbildungen der erfindungsgemäßen Kalibrierungsvorrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Kalibrierungsvorrichtung hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: ein Fahrzeug mit einer Wägevorrichtung nach dem Stand der Technik;
- Fig. 2: zwei Wägesensoren an einer Fahrzeugachse;
- Fig. 3: eine Kalibrierungsvorrichtung; und
- Fig. 4: eine Seitenansicht der Kalibrierungsvorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

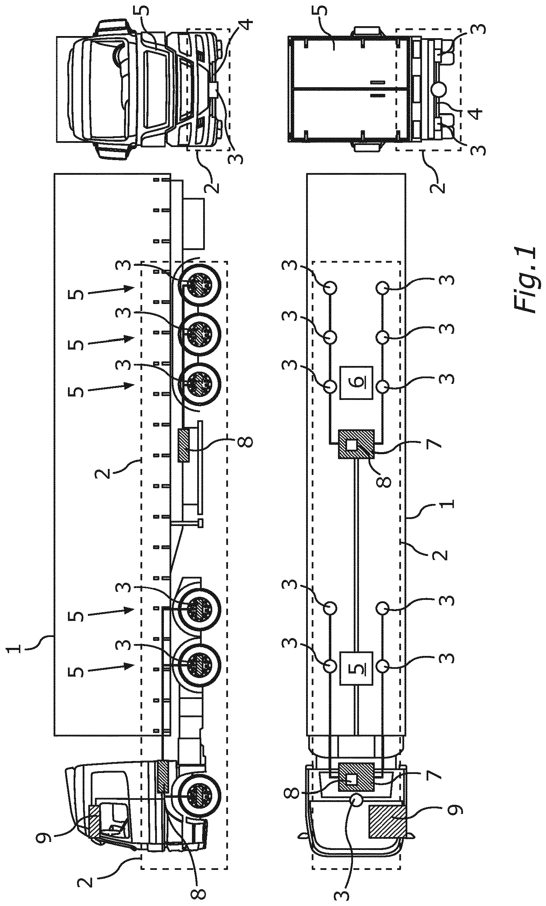

Fig. 1 zeigt ein Fahrzeug mit einer Wägevorrichtung nach dem Stand der Technik. Das Fahrzeug 1 weist die Wägevorrichtung 2 mit den Wägesensoren 3 auf, die an Fahrzeugachsen 4 des Fahrzeugs 1 angeordnet sein können. Die Wägesensoren 3 können beispielsweise pneumatische Sensoren, Winkelsensoren, hydraulische Sensoren oder Dehnmessstreifen sein. Die Wägevorrichtung 2 kann dazu vorgesehen sein, eine auf einer jeweiligen Fahrzeugachse 4 wirkende Achsenlast 5 zu erfassen. Dies kann beispielsweise erfolgen, indem die Wägesensoren 3 achsenbezogene Messwerte 6 an einer jeweiligen Fahrzeugachse 4 erfassen, welche dann an zumindest eine Steuereinheit 7 der Wägevorrichtung 2 übermittelt werden können. Bei den Messwerten 6 kann es sich beispielsweise um eine durch einen Wägesensor 3 an einer Fahrzeugachse 4 erfasste Dehnung handeln, welche aufgrund einer Biegung der Fahrzeugachse 4 unter der Achsenlast 5 erfolgen kann. Die Wägesensoren 3 der Wägevorrichtung 2 können derart an einer jeweiligen Fahrzeugachse 4 angeordnet sein, dass der Messwert 6 proportional zu der auf die Fahrzeugachse 4 wirkenden Achsenlast 5 ist. Es kann beispielsweise vorgesehen sein, dass ein als Dehnmessstreifen ausgelegter Wägesensor 3 eine Dehnung erfasst, die proportional zu der Achsenlast 5 ist. Um die Achsenlast 5 an einer jeweiligen Fahrzeugachse 4 oder bezogen auf das gesamte Fahrzeug 1 bestimmen zu können, kann in den Steuereinheiten 7 ein Kalibrierungswert 8 gespeichert sein.

Der Kalibrierungswert 8 kann ein Verhältnis des Messwertes 6 zu der Achsenlast 5 beschreiben. Bei einem linearen Zusammenhang kann es sich beispielsweise um einen Faktor handeln, mit welchem der Messwert 6 multipliziert werden muss, um auf die jeweilige Achsenlast 5 zu gelangen. Damit eine zuverlässige Bestimmung der Achsenlast 5 möglich ist, kann es erforderlich sein, ein vorbestimmtes Kalibrierungsverfahren durchzuführen, bei welchem die Messwerte 6 bei einer vorbestimmten, bekannten Achsenlast 5 erfasst werden. Es kann erforderlich sein, dass aufgrund eines Verschleißes eine regelmäßige Durchführung des Kalibrierungsverfahrens erforderlich ist. Die erfasste Achsenlast 5 kann auf einer Anzeigevorrichtung 9 des Fahrzeugs 1 angezeigt werden. Dabei kann es sich beispielsweise um einen digitalen Tachographen handeln.

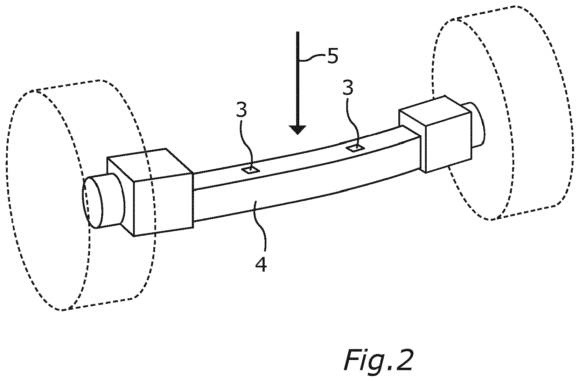

Fig. 2 zeigt zwei Wägesensoren an einer Fahrzeugachse eines Fahrzeugs. Bei den Wägesensoren 3 kann es sich beispielsweise um Dehnungssensoren handeln, welche eine Dehnung der Fahrzeugachse 4 erfassen können. Die Dehnung der Fahrzeugachse 4 kann beispielsweise aufgrund der Achsenlast 5 hervorgerufen werden. Dabei kann sich die Fahrzeugachse 4 biegen, sodass auf einer Seite der Fahrzeugachse 4 eine tensile Dehnung und auf einer gegenüberliegenden Seite eine kompressive Dehnung auftreten kann. Über die in Form der Dehnung erfassten Messwerte 6 kann die Biegung und folglich die auf die Fahrzeugachse 4 wirkende Achsenlast 5 bestimmt werden.

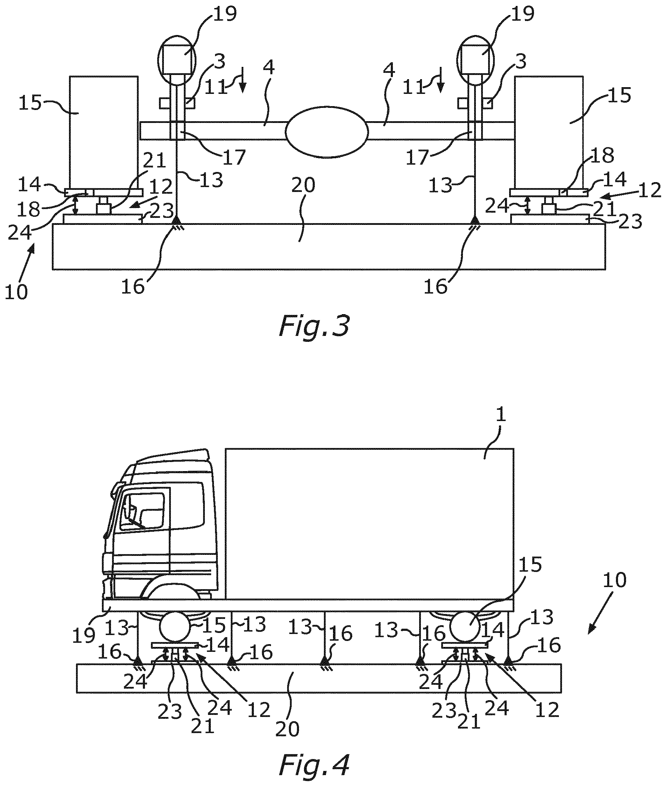

Fig. 3 zeigt eine Kalibrierungsvorrichtung. Die Kalibrierungsvorrichtung 10 kann dazu vorgesehen sein, die Fahrzeugachse 4 mit einer vorbestimmten Zugkraft 11 zu belasten. Zur Ausübung der Zugkraft 11 wird das Fahrzeug 1 zunächst mit seinen Rädern 15 der Fahrzeugachse 4 auf jeweiligen Aufstandselementen 14 der Kalibrierungsvorrichtung 10 positioniert, die beispielsweise als Metallplatten ausgebildet sind. Das Fahrzeug 1 wird daraufhin mit einem Zugelement 13, das an einer Halteeinrichtung 16 der Kalibrierungsvorrichtung 10 sowie dem Fahrzeug 1 befestigt ist, auf der Kalibrierungsvorrichtung 10 fixiert. Die Halteeinrichtung 16 ist zum Beispiel mit einer Bodenplatte der Kalibrierungsvorrichtung 10 fest gekoppelt und beispielsweise als Haken oder Öse ausgebildet. Das Zugelement 13 kann beispielsweise ein Lastgurt, ein Seil, oder eine Kette sein. Mittels eines Hubaktuators 12 wird nun das Aufstandselement 14 von einer aktuellen Ausgangsstellung in eine Anhebestellung relativ zur Halteeinrichtung 16 angehoben. Die Ausgangsstellung entspricht der Stellung, in der das Fahrzeug 1 mit seinen jeweiligen Rädern auf das jeweilige Aufstandselement 14 gefahren ist.

Die Anhebestellung ist relativ zur Ausgangsstellung in Fahrzeughochrichtung erhöht, und zwar um einen Höhenunterschied 24.

Der Hubaktuator 12 ist dazu ausgelegt, zumindest eine Teilmasse des Fahrzeugs 1 anzuheben, und umfasst einen Hydraulikzylinder 21, der dazu ausgelegt ist, das Aufstandselement 14 relativ zu einem Bodenelement 23 um den Höhenunterschied 24 hochzuheben. In der Anhebestellung wird über das Zugelement 13 die Zugkraft 11 auf das Fahrzeug 1 ausgewirkt. Dadurch ist es möglich, dass die Zugkraft 11 derart an Angriffspunkten 17 wirkt, dass sie in Richtung der Aufstandselemente 14 ausgerichtet ist. Das Zugelement 13 kann beispielsweise an einem Fahrzeugrahmen 19 des Fahrzeugs 1 angeordnet sein. Alternativ oder zusätzlich dazu kann das Zugelement 13 direkt an der Fahrzeugachse 4 angeordnet sein. In diesem Fall befindet sich der jeweilige Angriffspunkt 17 direkt an der Fahrzeugachse 4. Aufgrund der Zugkraft 11 kann sich die Fahrzeugachse 4 biegen, sodass durch die Wägesensoren 3, welche an der Fahrzeugachse 4 angeordnet sein können, eine durch die Biegung hervorgerufene Dehnung als jeweiliger Messwert 6 erfasst wird. Um den Messwerten 6 die zugeordnete Achsenlast 5 zuordnen zu können, und somit den Kalibrierungswert 8 bestimmen zu können, kann es erforderlich sein, dass die Kalibrierungsvorrichtung 10 eine Krafterfassungseinrichtung 18 aufweist. Die Krafterfassungseinrichtung 18 kann beispielsweise als Waage an dem Aufstandselement 14 angeordnet sein.

Das Aufstandselement 14 wird nun so lange angehoben bis die Stellung erreicht ist, in der von der Krafterfassungseinrichtung 18 ein gewünschtes Achsgewicht erreicht ist. Diese Stellung entspricht dann der Anhebestellung. Der Kalibrierungswert 8 kann durch die Steuereinheit 7 bestimmt werden, nachdem die jeweiligen Messwerte 6 und die jeweilige Achsenlast 5 an die Steuereinheit 7 übertragen worden sind und/oder in den jeweiligen Sensoren abgelegt wurden. Die Übertragung der Messwerte 6 kann erfolgen, indem die Wägesensoren 3, die Messwerte 6 über ein Kabel oder über Funk versenden und diese durch die Steuereinheit 7 empfangen werden. Zur Übertragung der Achsenlast 5 kann beispielsweise die Krafterfassungseinrichtung 18 die Beträge der Achsenlast 5 über eine Schnittstelle des Fahrzeugs 1 versenden, sodass diese durch die Steuereinheit 7 empfangen werden können.

Fig. 4 zeigt eine Seitenansicht eines auf der Kalibrierungsvorrichtung 10 positionierten Fahrzeugs 1. Nachdem das Fahrzeug 1 auf die Kalibrierungsvorrichtung 10 gefahren ist, werden Seile als Zugelemente 13 gespannt, mit denen der Fahrzeugrahmen 19 an beispielsweise insgesamt fünf Stellen mit jeweiligen Halteeinrichtungen 16 der Kalibrierungsvorrichtung 10 gekoppelt wird.

Der Begriff On-Board Weighing System (OWS) beschreibt ein im Fahrzeug 1 verbautes System zur Gewichtsbestimmung von Nutzfahrzeugen. Das auch als Wägevorrichtung 2 bekannte System umfasst:
Wägesensoren 3 zur Gewichtserfassung; eine Steuereinheit 7 als übergeordnetes Steuergerät (ECU) zur Gesamtgewichtermittlung aus übermittelten Messwerten 6 der Wägesensoren 3. Das übergeordnete Steuergerät kann wahlweise in einem Wägesensor 3 integriert sein, ein dediziertes Gerät sein oder Teil eines anderen Steuergerätes sein. Die Wägevorrichtung 2 kann auch eine Gewichtsanzeige als Anzeigeeinrichtung 9 im Fahrerhaus umfassen.

In der Fig. 1 ist schematisch eine Wägevorrichtung 2 in einem als Lastkraftwagen ausgebildetem Fahrzeug 1 dargestellt. Die Wägesensoren 3 sind über übergeordnete Steuergeräte miteinander und mit der Anzeigeeinrichtung 9 im Fahrerhaus verbunden, wo die Gewichtsinformation abgelesen werden kann.

Es sind auf dem Markt einige Sensortypen im Einsatz, um die jeweilige Achsenlast 5 an einer Fahrzeugachse 4 eines Fahrzeugs 1 feststellen zu können: Dehnmessstreifen-Sensoren (DMS), Winkelsensoren, Wiegezellen, Luftdrucksensoren und Hydraulikdruck-Sensoren.

Sehr häufig werden Dehnmessstreifen-Sensoren für Wägevorrichtungen 2 genutzt. Dehnungmessstreifen-Sensoren werden an der Fahrzeugachse 4 montiert. Ihr Messprinzip beruht auf dem Ansatz, dass eine vertikale Last bzw. Kraft die Fahrzeugachse 4 verbiegt. Die von der Fahrzeugachse 4 auf den Dehnmessstreifen übertragene Dehnung bzw. Stauchung kann von dem Wägesensor 3 als Messwert 6 gemessen werden. In Fig. 2 ist eine Fahrzeugachse 4 mit möglichen Befestigungspositionen der Dehnmessstreifen-Sensoren erkennbar.

Um dem Messwert 6 des Dehnmessstreifen-Sensors das zugehörige Beladungsgewicht des LKW zuordnen zu können, muss die Wägevorrichtung 2 kalibriert werden. Um eine anhaltende Genauigkeit der Wägevorrichtung 2 zu garantieren, muss die Kalibrierung in wiederkehrenden Zeitabständen erneut durchgeführt werden. Die Kalibrierung besteht darin, mindestens zwei Messpunkte (Null-Punkt und Maximallast-Punkt) zu messen und in den Wägesensor 3 oder die Steuereinheit 7 zu programmieren. Ausgehend von diesen zwei Messpunkten kann nun ein linearer Verlauf berechnet werden, der durch diese Messpunkte verläuft. Beispielsweise wird für Dehnmessstreifen-Sensoren die Messkurve durch zwei fahrzeugachsenpezifische Biegungswerte als Kalibrierungswerte 8 repräsentiert. Aktuell werden solche Kalibrierungsvorgänge durch Belasten des Fahrzeugs 1 mit Referenzgewichten erzielt. Der Nullpunkt, beziehungsweise ein niedriges Gewicht ist entweder gegeben durch das Fahrzeugleergewicht oder durch die Beladung mit einem "leichten" Referenzgewicht.

Die Hersteller von solchen Systemen bieten auch Kalibrierungsdienste für Ihre Kunden, die im Ergebnis zeitaufwändig und teuer für die Inhaber einer Flotte von Fahrzeugen 1 sind. Außerdem gibt es eine neue Gesetzgebung für Nutzfahrzeuge, die die Installation einer Wägevorrichtung 2 ab 2021 mit einer Genauigkeit von 10% vorschreibt. Diese kann durch eine periodische Durchführung von Kalibrierungsverfahren gewährleistet werden. Ab 2024 ist eine Genauigkeit von 5% vorgeschrieben.

Da insbesondere für den oberen Kalibrationspunkt ein möglichst hohes Gewicht aufgebracht werden muss, benötigt dieses Gewicht viel Lagerplatz. Insbesondere das schwere Referenzgewicht ist schwer zu transportieren und benötigt Hilfsmittel, z. B. einen Gabelstapler, um das Gewicht auf die Ladefläche eines Nutzfahrzeugs zu stellen. Für den Transport des Referenzgewichts ist ausreichend Platz notwendig. Sofern das Referenzgewicht nicht dauerhaft vorhanden ist und mit einem Nutzfahrzeug zur Verfügung gestellt wird, entstehen zusätzlich Transportkosten. Durch die hohe Kalibrierungszeit entstehen hohe Kosten für die Fahrzeugflotten aufgrund der Standzeit, d. h. die Fahrzeuge können während der Kalibrierung nicht für andere Zwecke genutzt werden. Die Gesetzgebung EU 2015/719 fordert eine vorbestimmte Genauigkeit der Wägevorrichtungen 2.

Wägevorrichtungen 2 sollen periodisch von akkreditierten Werkstäten kalibriert werden, damit die Genauigkeit gewährleistet wird. Das Ausstatten der Werkstätten mit Referenzgewichten ist unpraktikabel. Die vorbestimmte Genauigkeit der Wägevorrichtungen 2 erfordert eine noch höhere Genauigkeit der Kalibrierungsvorrichtungen.

Die Kalibrierungsvorrichtung 10 für Wägevorrichtungen 2 simuliert die Kraft eines Lastgewichtes auf das Fahrzeug 1, ohne das Fahrzeug 1 tatsächlich mit Gewichten zu beladen. Somit wird das Beladen von Fahrzeugen 1 zwecks Kalibrierung mit Gewichten überflüssig. Dies vereinfacht den Kalibrierungsvorgang erheblich. Das Konzept, das in Fig. 3 und Fig. 4 skizziert ist, kann prinzipiell für alle Wägevorrichtungen 2 angewandt werden, die Messkurven benutzen. Hier wird der Kalibrierungsansatz anhand des Prinzips der Dehnmessstreifen erläutert:
Bei diesem Konzept wird die Biegung der Fahrzeugachse 4 erreicht, indem die Fahrzeugachse 4 des Fahrzeugs 1 mit Hubaktuatoren 12 angehoben werden. Das Fahrzeug 1 fährt mit beiden Rädern 15 einer Fahrzeugachse 4 jeweils auf ein Wiegepad, auf dem es jeweils abgestellt wird. Bei jedem der Wiegepads handelt es sich um ein Aufstandselement 14, an dem die Krafterfassungseinrichtung 18 angeordnet sein kann. Die Summe aus beiden Wiegepads ergibt die tatsächliche Achsenlast 5. Diese kann nun in die Wägesensoren 3 und/oder die Steuereinheit 7 einprogrammiert werden. Das Fahrzeug 1 wird mit Gurten als Zugelemente 13 an der Bodenplatte 20 fixiert, sodass es sich nicht nach oben bewegen kann. Für diese Fixierung sind auf Seiten der Kalibrierungsvorrichtung 10 die Halteeinrichtungen 16 vorgesehen. Die Aufstandselemente 14 werden mit Hydraulikzylindern 21 als Hubaktuatoren 12 angehoben. Durch das Hinaufpressen beider Räder 15 der Fahrzeugachse 4 wird die Zugkraft 11 auf die Fahrzeugachse 4 ausgeübt, die sich in einer Biegung äußern. Die daraus entstehende Biegung, das heißt Dehnung beziehungsweise Stauchung, in der Fahrzeugachse 4 wird vom dem als Dehnmessstreifen ausgebildeten Wägesensor 3 registriert. Die Krafterfassungseinrichtungen 18 zeigen einen Messwert für das Gewicht an, das von dem Aufstandselement 14 auf die Räder 15 und somit auf die Fahrzeugachse 4 und den Fahrzeugrahmen 19 übertragen wird. Das Aufstandselement muss so weit oder so hoch angehoben werden, bis das gewünschte Achsgewicht erreicht ist. Das heißt die Höhe der Anhebestellung legt den Betrag der wirkenden Zugkraft 11 fest. Dieser Ansatz funktioniert nach dem umgekehrten Prinzip des Ansatzes eines seilzug-basierten Kalibriersystems für ein OWS in Fahrzeugen 1. Anstatt das Fahrzeug 1 nach unten zu ziehen, wird das Fahrzeug 1 mittels des zumindest einen Zugelements 13 festgehalten und die Räder 15 werden nach oben gedrückt. Die Kalibrierung kann auch achsenweise erfolgen.

Eine Kalibriersequenz könnte wie folgt aussehen: (1) Das Fahrzeug 1 fährt auf die Kalibrierungsvorrichtung 10, die ausgestattet ist mit Wiegepads und Verankerungen an der Bodenplatte 20, den Halteeinrichtungen 16. (2) Die Zugelemente 13, beispielsweise Seile, werden am Fahrzeug 1 angebracht. (3) Das Kalibriersystem wird an die Wägevorrichtung 2 im Fahrzeug 1 angeschlossen. (4) Der Kalibrierungsvorgang wird gestartet, wobei der Nullpunkt gemessen und einprogrammiert sowie das Fahrzeug 1 zur maximalen Achsenlast geliftet und der Messwert einprogrammiert wird.

Die Kalibrierungsvorrichtungen 10 weisen folgende Vorteile auf:
Geringer Lagerplatz; das Zugkraft-Konzept kann mit geringem Aufwand realisiert und für Werkstätten vermarktet werden; kein Platzbedarf notwendig für den Transport oder einer Lagerung von Referenzgewichten; überschaubare Investition für die Werkstätten; Reduzierung der Kalibrierzeit und -kosten für die Flotten;
OWS-Kalibrierung kann mit Tachographenkalibrierungsterminen kombiniert werden in den Partnerwerkstätten.

Die Wägevorrichtung 2 kann auch zum Kalibrieren von (Sonder-)Fahrzeugen, die nicht unter die Gesetzgebung fallen, verwendet werden. Beispielsweise können auch Wägevorrichtungen 2 von Bahnwaggons kalibriert werden.

Insgesamt zeigt das Beispiel, wie durch die Erfindung ein liftbasiertes Kalibrierungskonzept für ein On-Board Weighing System ermöglicht wird.

## Patentansprüche

1. Verfahren zur Kalibrierung einer Wägevorrichtung (2) einer Fahrzeugachse (4) eines Fahrzeugs (1) mittels einer Kalibrierungsvorrichtung (10), wobei
- das Fahrzeug (1) auf der Kalibrierungsvorrichtung (10) derart angeordnet wird, dass zumindest ein Rad (15) der Fahrzeugachse (4) auf einem Aufstandselement (14) der Kalibrierungsvorrichtung (10) angeordnet wird,
- zumindest ein, mit einer Halteeinrichtung (16) der Kalibrierungsvorrichtung (10) verbundenes Zugelement (13) mit dem Fahrzeug (1) verbunden wird, wobei das Zugelement (13) an der Fahrzeugachse (4) angeordnet wird,
- mittels eines Hubaktuators (12) das Aufstandselement (14) von einer Ausgangsstellung in eine Anhebestellung relativ zur Halteeinrichtung (16) angehoben wird, wobei in der Anhebestellung über das Zugelement (13) eine vorbestimmte Zugkraft (11) auf das Fahrzeug (1) in Richtung des Aufstandselements (14) wirkt,
- durch eine Krafterfassungseinrichtung (18) eine wirkende Achsenlast (5) erfasst wird,
- mittels zumindest eines Wägesensors (3) der Wägevorrichtung (2) ein Messwert (6) bezogen auf die Fahrzeugachse (4) erfasst wird, und
- dem Messwert (6) in einer Steuereinheit (17) der Wägevorrichtung (2) die wirkende Achsenlast (5) zugeordnet wird.

2. Verfahren nach Anspruch 1, **dadurch gekennzeichnet, dass**
das Zugelement (13) ein Seil und/oder eine Kette und/oder einen Gurt und/oder eine Stange aufweist.

3. Verfahren nach einem der vorhergehenden Ansprüche, **dadurch gekennzeichnet, dass**
die Krafterfassungseinrichtung (18) eine an dem Zugelement (13) angeordnete Zugerfassungseinheit aufweist.

4. Verfahren nach einem der Ansprüche 1 oder 2, **dadurch gekennzeichnet, dass**
die Krafterfassungseinrichtung (18) eine an dem Aufstandselement (14) angeordnete Wiegeeinrichtung aufweist.

5. Verfahren nach einem der vorhergehenden Ansprüche, **dadurch gekennzeichnet, dass**
der Hubaktuator (12) einen hydraulischen Aktuator, insbesondere einen Hydraulikzylinder (21), oder einen Elektromotor mit Gewinde aufweist.

6. Verfahren nach einem der vorhergehenden Ansprüche, **dadurch gekennzeichnet, dass**
die Achsenlast (5) über eine Schnittstelle des Fahrzeugs (1) von der Krafterfassungseinrichtung (18) an eine Steuereinheit (7) der Wägevorrichtung (2) übertragen wird.

7. Verfahren nach einem der vorhergehenden Ansprüche, **dadurch gekennzeichnet, dass**
der zumindest eine Wägesensor (3) der Wägevorrichtung (2) ein Dehnmessstreifen ist.

8. Kalibrierungsvorrichtung (10) zur Kalibrierung einer Wägevorrichtung (2) einer Fahrzeugachse (4) eines Fahrzeugs (1), wobei die Kalibrierungsvorrichtung (10)
- ein Aufstandselement (14) zur Anordnung zumindest eines Rads (15) der Fahrzeugachse (4) des Fahrzeugs (1) aufweist,
- zumindest ein Zugelement (13) zum Verbinden des Fahrzeugs (1) mit einer Halteeinrichtung (16) der Kalibrierungsvorrichtung (10), wobei das Zugelement (13) dazu eingerichtet ist, an der Fahrzeugachse (4) angeordnet zu werden, aufweist,
- dazu eingerichtet ist, mittels eines Hubaktuators (12) das Aufstandselements (14) von einer Ausgangsstellung in eine Anhebestellung relativ zur Halteeinrichtung (16) anzuheben und die Zugkraft (11) durch das Zugelement (13) auf das Fahrzeug (1) derart zu übertragen, dass die Zugkraft (11) an dem Fahrzeug (1) in Richtung des Aufstandselements (14) wirkt,
- eine Krafterfassungseinrichtung (18) aufweist, die dazu eingerichtet ist, eine wirkende Achsenlast (5) zu erfassen.

## Claims

1. Method for calibrating a weighing apparatus (2) of a vehicle axle (4) of a vehicle (1) by means of a calibrating apparatus (10), wherein
- the vehicle (1) is arranged on the calibrating apparatus (10) in such a way that at least one wheel (15) of the vehicle axle (4) is arranged on a standing element (14) of the calibrating apparatus (10),
- at least one tension element (13) connected to a holding device (16) of the calibrating apparatus (10) is connected to the vehicle (1), wherein the tension element (13) is arranged on the vehicle axle (4),
- the standing element (14) is raised from an initial position into a raised position relative to the holding device (16) by means of a lifting actuator (12), wherein, in the raised position, a predetermined tensile force (11) acts via the tension element (13) on the vehicle (1) in the direction of the standing element (14),
- an acting axle load (5) is detected by a force-detecting device (18),
- a measurement value (6) in relation to the vehicle axle (4) is detected by means of at least one weighing sensor (3) of the weighing apparatus (2), and
- the acting axle load (5) is assigned to the measurement value (6) in a control unit (17) of the weighing apparatus (2).

2. Method according to Claim 1, **characterized in that**
the tension element (13) has a rope and/or a chain and/or a strap and/or a rod.

3. Method according to either of the preceding claims, **characterized in that**
the force-detecting device (18) has a tension-detecting unit which is arranged on the tension element (13).

4. Method according to either of Claims 1 and 2, **characterized in that**
the force-detecting device (18) has a weighing device which is arranged on the standing element (14).

5. Method according to one of the preceding claims, **characterized in that**
the lifting actuator (12) has a hydraulic actuator, in particular a hydraulic cylinder (21), or an electric motor with thread.

6. Method according to one of the preceding claims, **characterized in that**
the axle load (5) is transmitted via an interface of the vehicle (1) from the force-detecting device (18) to a control unit (7) of the weighing apparatus (2).

7. Method according to one of the preceding claims, **characterized in that** the at least one weighing sensor (3) of the weighing apparatus (2) is a strain gauge.

8. Calibrating apparatus (10) for calibrating a weighing apparatus (2) of a vehicle axle (4) of a vehicle (1), wherein the calibrating apparatus (10)
- has a standing element (14) for arrangement of at least one wheel (15) of the vehicle axle (4) of the vehicle (1),
- has at least one tension element (13) for connecting the vehicle (1) to a holding device (16) of the calibrating apparatus (10), wherein the tension element (13) is configured to be arranged on the vehicle axle (4),
- is configured to raise the standing element (14) from an initial position into a raised position relative to the holding device (16) by means of a lifting actuator (12) and to transmit the tensile force (11) by way of the tension element (13) to the vehicle (1) in such a way that the tensile force (11) acts on the vehicle (1) in the direction of the standing element (14),
- has a force-detecting device (18) which is configured to detect an acting axle load (5).

## Revendications

1. Procédé d'étalonnage d'un dispositif de pesée (2) d'un essieu de véhicule (4) d'un véhicule (1) au moyen d'un dispositif d'étalonnage (10),
- le véhicule (1) étant disposé sur le dispositif d'étalonnage (10) de manière à ce qu'au moins une roue (15) de l'essieu de véhicule (4) soit disposée sur un élément de support (14) du dispositif d'étalonnage (10),
- au moins un élément de traction (13), relié à un module de retenue (16) du dispositif d'étalonnage (10), étant relié au véhicule (1), l'élément de traction (13) étant disposé au niveau de l'essieu de véhicule (4),
- l'élément de support (14) étant relevé, au moyen d'un actionneur de levage (12), d'une position initiale à une position de levage par rapport au module de retenue (16), une force de traction prédéterminée (11) agissant, dans la position de levage, sur le véhicule (1) par le biais de l'élément de traction (13) en direction de l'élément de support (14),
- une charge d'essieu agissante (5) étant détectée par un module de détection de force (18),
- une valeur de mesure (6) relative à l'essieu de véhicule (4) étant détectée au moyen d'au moins un capteur de pesée (3) du dispositif de pesée (2), et
- la valeur de mesure (6) étant associée à la charge d'essieu agissante (5) dans une unité de commande (17) du dispositif de pesée (2).

2. Procédé selon la revendication 1, **caractérisé en ce que** l'élément de traction (13) comprend une corde et/ou une chaîne et/ou une sangle et/ou une barre.

3. Procédé selon l'une des revendications précédentes, **caractérisé en ce que** le module de détection de force (18) comporte une unité de détection de traction disposée au niveau de l'élément de traction (13).

4. Procédé selon l'une des revendications 1 et 2, **caractérisé en ce que** le module de détection de force (18) comporte un module de pesée disposé au niveau de l'élément de support (14).

5. Procédé selon l'une des revendications précédentes, **caractérisé en ce que** l'actionneur de levage (12) comporte un actionneur hydraulique, en particulier un vérin hydraulique (21), ou un moteur électrique pourvu d'un filetage.

6. Procédé selon l'une des revendications précédentes, **caractérisé en ce que** la charge d'essieu (5) est transmise, par le biais d'une interface du véhicule (1), du module de détection de force (18) à une unité de commande (7) du dispositif de pesée (2).

7. Procédé selon l'une des revendications précédentes, **caractérisé en ce que** l'au moins un capteur de pesée (3) du dispositif de pesée (2) est une jauge de contrainte.

8. Dispositif d'étalonnage (10) destiné à étalonner un dispositif de pesée (2) d'un essieu de véhicule (4) d'un véhicule (1),
le dispositif d'étalonnage (10)
- comportant un élément de support (14) destiné à disposer au moins une roue (15) de l'essieu de véhicule (4) du véhicule (1),
- comprenant au moins un élément de traction (13) destiné à relier le véhicule (1) à un module de retenue (16) du dispositif d'étalonnage (10), l'élément de traction (13) étant conçu pour être disposé au niveau de l'essieu de véhicule (4),
- étant conçu pour lever l'élément de support (14) d'une position initiale à une position de levage par rapport au module de retenue (16) au moyen d'un actionneur de levage (12) et transmettre la force de traction (11) au véhicule (1) par le biais de l'élément de traction (13) de manière à ce que la force de traction (11) agisse sur le véhicule (1) en direction de l'élément de support (14),
- comportant un module de détection de force (18) qui est conçu pour détecter une charge d'essieu agissante (5).
